# EUROPÄISCHE PATENTSCHRIFT

(11) **EP 2 860 397 B1**
(45) Veröffentlichungstag und Bekanntmachung des Hinweises auf die Patenterteilung: **14.09.2016**
(21) Anmeldenummer: 14176986.9
(22) Anmeldetag: 15.07.2014
(51) Int. Cl.: F04B 1/20, F04B 49/00

(54) **Antriebssystem für hydraulisch angetriebene Arbeitsorgane einer Arbeitsmaschine**
Drive system for hydraulically driven working parts of a working machine
Système d'entraînement pour organes de travail entraînés hydrauliquement d'une machine de travail

(30) Priorität: 24.09.2013 DE 102013110568
(43) Veröffentlichungstag der Anmeldung: 15.04.2015
(73) Patentinhaber: CLAAS Selbstfahrende Erntemaschinen GmbH, 33428 Harsewinkel (DE)
(72) Erfinder: Dückingaus, Heinrich, 33649 Bielefeld (DE); Schlichting, Dirk, 33100 Paderborn (DE); Schneider, Heinrich, 33428 Harsewinkel (DE)

(56) Entgegenhaltungen:
- EP-A1- 2 312 928
- EP-A2- 2 138 720
- DE-A1-102012 218 446
- DE-C1- 19 540 654

## Beschreibung

Die vorliegende Erfindung betrifft ein Antriebssystem für hydraulisch angetriebene Arbeitsorgane einer Arbeitsmaschine gemäß dem Oberbegriff des Anspruches 1 sowie ein Verfahren zum Betreiben eines Antriebssystems für hydraulisch angetriebene Arbeitsorgane einer Arbeitsmaschine gemäß dem Oberbegriff des Anspruches 11.

Aus der EP 2 312 928 A1 ist ein Antriebssystem für einen Einzugförderer einer Erntemaschine bekannt, das eine verstellbare Hydropumpe umfasst, deren Flussrate und Flussrichtung durch einen doppeltwirkenden Hydraulikzylinder verstellbar ist. Der Hydraulikzylinder wird hierzu durch ein elektromagnetisches Ventil über eine Steuereinheit angesteuert. Im Fall der Detektion eines Fremdkörpers in dem Einzugförderer wird das elektromagnetische Ventil durch die Steuereinheit temporär derart angesteuert, dass eine Umkehrung der Förderrichtung einsetzt, so dass sich die Hydropumpe nicht mehr nennenswert in der Förderrichtung drehen sollte. Ein wesentlicher Nachteil besteht darin, dass das Fördervolumen nicht auf null beschränkbar ist, was Toleranzen im Antriebssystem geschuldet ist. Ein Nachteil, der aus der Ansteuerung des Magnetventiles resultiert, besteht darin, dass die Dynamik, mit der das Magnetventil im Fall einer Fremdkörperdetektion den Schnellstopp auslöst, zu gering ist, um den hohen Anforderungen an die Betriebssicherheit im Fall eines Schnellstopps zu genügen. Um eine schnellstmögliche Richtungsumkehr der Förderrichtung zu erzielen, wird das Magnetventil stromlos geschaltet, damit sich das Magnetfeld schnell abbauen kann. Im Anschluss daran wird das Magnetventil wieder bestromt, wodurch die Nullstellung der Hydropumpe angesteuert wird.

Aufgabe der vorliegenden Erfindung ist es, ein Antriebssystem der eingangs genannten Art derart weiterzuentwickeln, dass im Fall eines Schnellstopps eines Arbeitsorganes der Arbeitsmaschine die Axialkolbenpumpe ihre Nullstellung schnell und präzise einnimmt. Weiterhin liegt der Erfindung die Aufgabe zu Grunde, ein Verfahren zum Betreiben einer Arbeitsmaschine bereitzustellen, die das schnelle und genaue Erreichen der Nullstellung der Axialkolbenpumpe ermöglicht.

Diese Aufgabe wird vorrichtungsseitig durch die kennzeichnenden Merkmale des Anspruches 1 und verfahrensseitig durch die kennzeichnenden Merkmale des Anspruches 11 gelöst.

Gemäß dem Vorrichtungsanspruch 1 wird vorgeschlagen, dass das Antriebssystem eine von der Steuereinheit ansteuerbare Steuerventilanordnung aufweist, durch welche eine Begrenzungsvorrichtung, die ein kolbenförmiges Element aufweist, welches zumindest einseitig hydraulisch druckbeaufschlagbar ist, ansteuerbar ist, durch die der Schwenkwinkel der Axialkolbenpumpe mechanisch auf null Grad (0°) festlegbar ist. Eine schnelle Veränderung des Schwenkwinkels bewirkt eine Umkehr der Förderrichtung, wenn der Schwenkwinkel durch null ins Negative geht. Deshalb wird eine Veränderung des Schwenkwinkels ins Negative durch die Begrenzungsvorrichtung abrupt gestoppt und in dieser Anschlagsposition gehalten. Dadurch ist gewährleistet, dass die Axialkolbenpumpe im Fall eines Schnellstopps eines Arbeitsorganes keine Förderleistung aufweist. Hierbei fungiert die Begrenzungsvorrichtung als einfachwirkender Zylinder. Auf der einen Seite ist das kolbenförmige Element mit einem Hydraulikdruck beaufschlagbar, während auf der anderen Seite die Gewichtskraft der Schwenkwiege der Axialkolbenpumpe wirkt. Somit kann ohne ein zusätzliches Rückstellmittel gearbeitet werden, um unterschiedliche Positionen einnehmen zu können, die für einen Schnellstopp sowie das Reversieren notwendig sind.

Vorteilhafterweise kann die Steuerventilanordnung eine Ventilbaugruppe sowie ein erstes und ein zweites Steuerventil umfassen. Durch den Einsatz mehrerer Steuerventile kann neben dem Schnellstopp auch ein Reversieren des Hydromotors realisiert werden. Dabei kann das Reversieren unabhängig von einem Schnellstopp durchgeführt werden.

Weiterhin kann die Ventilbaugruppe ein Ventilbaugruppengehäuse umfassen, in welchem ein Einlassventil und ein Auslassventil sowie die Begrenzungsvorrichtung angeordnet sind.

In vorteilhafter Weiterbildung kann die Begrenzungsvorrichtung derart verstellbar sein, dass die Förderrichtung der Axialkolbenpumpe umkehrbar ist. Hierdurch kann das Antriebssystem auch reversierend betrieben werden.

Insbesondere kann die Begrenzungsvorrichtung durch das erste Steuerventil ansteuerbar sein. Hierdurch kann die Begrenzungsvorrichtung individuell angesteuert werden, was für das Durchführen eines Schnellstopps sowie das Reversieren des Hydromotors vorteilhaft ist. Des Weiteren ermöglicht die Ansteuerung durch das erste Steuerventil eine einfache Einstellung der Begrenzungsvorrichtung, um diese an die tatsächliche Nullstellung des Schwenkwinkels anpassen zu können.

Des Weiteren kann das zweite Steuerventil das Einlassventil und das Auslassventil, welche den Zufluss sowie den Abfluss von Hydrauliköl zu beziehungsweise von der Axialkolbenpumpe steuern, ansteuern. Das Einlassventil als auch das Auslassventil können als Schieberventile ausgeführt sein.

Vorteilhafterweise kann die Steuereinheit zur Detektion eines Betriebszustandes der Arbeitsmaschine eingerichtet sein, der für das Eindringen eines Fremdkörpers in ein Arbeitsorgan der Arbeitsmaschine oder ein Auslösen eines Reversiervorganges eines Arbeitsorganes repräsentativ ist. Auf diese Weise kann sichergestellt werden, dass die Ansteuerung des ersten Steuerventiles beziehungsweise des zweiten Steuerventiles durch die Steuereinheit entsprechend des sich einstellenden Betriebszustandes aufeinander abgestimmt erfolgt.

Des Weiteren betrifft die Erfindung ein Verfahren zum Betreiben eines Antriebssystems für hydraulisch angetriebene Arbeitsorgane einer Arbeitsmaschine, mit einer Axialkolbenpumpe, deren Fördervolumen und Förderrichtung durch Veränderung ihres Schwenkwinkels variiert wird, einen mit der Axialkolbenpumpe leitungsverbundenden Hydromotor, der mit den Arbeitsorganen in Antriebsverbindung steht, sowie eine Steuereinheit, die derart betreibbar ist, dass das Fördervolumen der Axialkolbenpumpe auf null gestellt wird.

Gemäß dem Verfahrensanspruch 11 wird vorgeschlagen, dass das Vorliegen eines Betriebszustandes detektiert wird, der für das Eindringen eines Fremdkörpers in ein Arbeitsorgan der Arbeitsmaschine oder ein Auslösen eines Reversiervorganges eines Arbeitsorganes repräsentativ ist, und dass in Abhängigkeit von dem detektierten Betriebszustand durch die Steuereinheit eine Aktorik zur Ansteuerung einer Begrenzungsvorrichtung, die ein kolbenförmiges Element aufweist, welches zumindest einseitig hydraulisch druckbeaufschlagbar ist, angesteuert wird, mittels der der Schwenkwinkel der Axialkolbenpumpe mechanisch dem Betriebszustand entsprechend festgelegt wird. Auf diese Weise lassen sich Betriebszustände abbilden, die dem Schnellstopp oder dem Reversieren des Arbeitsaggregates entsprechen.

Vorteilhafterweise kann von der Steuereinheit ein erstes Steuerventil der Steuerventilanordnung derart angesteuert werden, dass die Begrenzungsvorrichtung in eine Stellung überführt wird, in welcher der Schwenkwinkel der Axialkolbenpumpe durch die Begrenzungsvorrichtung auf null festgelegt wird.

Dabei kann bei Detektion des Auslösens eines Reversiervorganges das erste Steuerventil der Steuerventilanordnung derart angesteuert werden, dass die Begrenzungsvorrichtung in eine Stellung überführt wird, in der die Axialkolbenpumpe reversierend betreibbar ist.

Im einfachsten Fall ist ein Steuerventil vorgesehen, welches die Begrenzungsvorrichtung ansteuert. Hierbei wird das kolbenförmige Element mit einem Hydraulikdruck beaufschlagt, so dass das kolbenförmige Element soweit in das Innere des Gehäuses der Axialkolbenpumpe ragt, wie es der Nullstellung des Schwenkwinkels entspricht. Vorzugsweise wird die Bewegung des kolbenförmigen Elementes durch einen Anschlag am oder im Gehäuse begrenzt. Für das Reversieren wird das Steuerventil derart angesteuert, dass das kolbenförmige Element nicht mit Hydraulikdruck beaufschlagt wird. Gewichtskraftbedingt wird das kolbenförmige Element in eine Stellung überführt, in welcher es nicht in das Innere der Axialkolbenpumpe hineinragt. Durch den Fortfall der mechanischen Begrenzung der Nullstellung des Schwenkwinkels kann dieser einen negativen Wert annehmen, der dem reversierenden Betrieb der Axialkolbenpumpe entspricht.

Insbesondere kann bei Detektion eines Fremdkörpers in einem Arbeitsorgan von der Steuereinheit ein zweites Steuerventil derart angesteuert werden, dass die Axialkolbenpumpe eine Förderrichtungsumkehr erfährt.

Die vorliegende Erfindung wird nachstehend anhand eines in den Zeichnungen dargestellten Ausführungsbeispieles näher erläutert.

Es zeigen:
- Fig. 1: eine schematische Seitenansicht eines Feldhäcksler;
- Fig. 2: eine Detaildraufsicht auf ein Antriebssystems des Feldhäckslers;
- Fig. 3: eine Teilschnittansicht einer Axialkolbenpumpe mit einer daran angeordneten Ventilbaugruppe;
- Fig. 4: ein Flussdiagramm;
- Fig. 5: eine Teilschnittansicht einer Axialkolbenpumpe mit einer daran angeordneten Ventilbaugruppe gemäß einer zweiten Ausführungsform in einer ersten Betriebssituation;
- Fig. 6: eine Teilschnittansicht einer Axialkolbenpumpe mit einer daran angeordneten Ventilbaugruppe gemäß einer zweiten Ausführungsform in einer zweiten Betriebssituation.

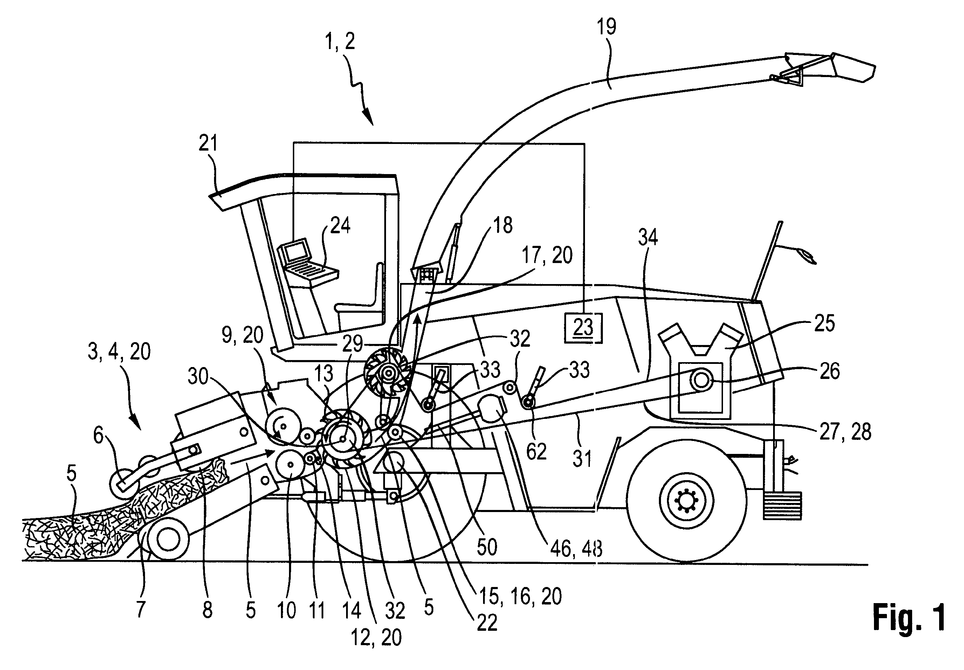

Fig. 1 zeigt eine als Feldhäcksler 2 ausgeführte landwirtschaftliche Arbeitsmaschine 1, die in ihrem frontseitigen Bereich ein als Pick-up 4 ausgeführtes Vorsatzgerät 3 aufnimmt. Anstelle einer Pick-up kann beispielsweise auch ein Maisgebiss zum Einsatz kommen. Die Pick-up 4 ist so gestaltet, dass sie einen Erntegutstrang 5 zwischen einer Niederhaltereinrichtung 6 und einer Aufsammeltrommel 7 aufnimmt und im rückwärtigen Bereich der Pick-up 4 einer Querförderschnecke 8 zuführt. Die Querförderschnecke 8 übergibt das Erntegut 5 nahezu mittig der Pick-up 4 nachgeordneten Einzugorganen 9. Im dargestellten Ausführungsbeispiel werden die Einzugorgane 9 von paarweise angeordneten Einzugswalzen 10 und diesen nachgeordneten Vorpresswalzen 11 gebildet. Nachdem der Erntegutstrang 5 die Einzugorgane 9 passiert hat, wird er in deren rückwärtigen Bereich an eine Häckseltrommel 12 übergeben. Die Häckseltrommel 12 nimmt an ihrem Umfang eine Vielzahl von Häckselmessern 13 auf, die den Erntegutstrang 5 im Zusammenwirken mit einer Gegenschneide 14 zerkleinert. Durch die kinetische Energie der umlaufenden Häckseltrommel 12 tritt der Erntegutstrang 5 im rückwärtigen Bereich der Häckseltrommel 12 mit hoher Geschwindigkeit aus dieser aus und wird an paarweise angeordnete Crackerwalzen 15 übergeben. Die Crackerwalzen 15 bilden dabei eine sogenannte Nachzerkleinerungseinrichtung 16, die optional zum Einsatz kommen kann. Nachdem der Erntegutstrang 5 die Nachzerkleinerungseinrichtung 16 passiert hat, gelangt er in den Wirkbereich eines Nachbeschleunigers 17. Der Nachbeschleuniger 17 prägt dem Erntegutstrang 5 in an sich bekannter Weise zusätzliche kinetische Energie auf, mittels derer der Erntegutstrang 5 über einen im Wesentlichen in vertikaler Richtung weisenden Auswurfschacht 18 und einen diesem nachgeordneten schwenk- und drehbeweglichen Auswurfkrümmer 19 aus dem Feldhäcksler 2 herausgefördert wird. Im dargestellten Ausführungsbeispiel bilden das Vorsatzgerät 3, die Einzugorgane 9, die Häckseltrommel 12, die optionale Nachzerkleinerungseinrichtung 16, sowie der Nachbeschleuniger 17 die erfindungsgemäßen Arbeitsorgane 20 der landwirtschaftlichen Arbeitsmaschine 1.

Weiter ist dem Feldhäcksler 2 zumindest ein Antriebsmotor 25 zugeordnet, dessen abtriebsseitige Riemenscheibe 26 von einem Antriebsriemen 27 umschlungen wird. Der Antriebsriemen 27 bildet in erfindungsgemäßer Weise einen Hauptantriebsriemen 28. Im dargestellten Ausführungsbeispiel erstreckt sich der Hauptantriebsriemen 28 zwischen der abtriebsseitigen Riemenscheibe 26 des Antriebsmotors 25 und einer der Antriebswelle 29 der Häckseltrommel 12 zugeordneten Riemenscheibe 30. Während sich das sogenannte Zugtrum 31 unmittelbar zwischen der Häckseltrommel 12 und der Riemenscheibe 26 des Antriebsmotors 25 erstreckt und frei von weiteren energieabgreifenden Elementen ist, sind die weiteren im folgenden noch näher zu beschreibenden Abtriebe 32 und Spanneinrichtungen 33 in dem sogenannten Leertrum 34 angeordnet. Im dargestellten Ausführungsbeispiel liegt die, die Häckseltrommel 12 mit Antriebsenergie versorgende Riemenscheibe 30 in vertikaler Richtung tiefer als die dem Antriebsmotor 25 zugeordnete Riemenscheibe 26. In der Kabine 21 des Feldhäckslers 2 befindet sich eine Ein- und Ausgabeeinheit 24 einer Steuereinheit 23, die unter anderem der Steuerung der Einzugorgane 9 dient. Die Ein- und Ausgabeeinheit 24 der Steuereinheit 23 ist beispielsweise als eine Tastatur und eine Bildschirmeinheit ausgeführt.

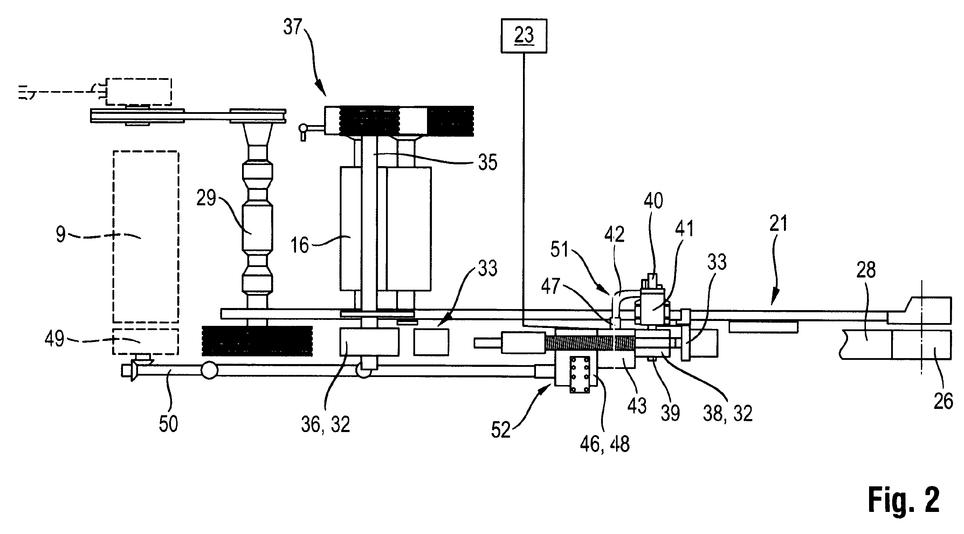

In Fig. 2 ist eine schematische Ansicht eines Antriebssystems in Draufsicht dargestellt. In einer vertikal höchsten Position ist auf der Nachbeschleunigerwelle 35 eine Riemenscheibe 36 angeordnet, die zumindest teilweise von dem Hauptantriebsriemen 28 umschlungen wird. In an sich bekannter Weise ist der Nachbeschleunigerwelle 35 einem Ende eine Getriebestufe 37 zugeordnet, mittels derer die optionale Nachzerkleinerungseinrichtung 16 antreibbar ist. Auf diese Weise ist mittels der Riemenscheibe 36 zugleich der Nachbeschleuniger 17 und die Nachzerkleinerungseinrichtung 16 antreibbar, sodass diese Riemenscheibe 36 einen der dem Hautantriebsriemen zugeordneten Abtriebe 32 bildet. In vertikaler Richtung zwischen der Position, der dem Antriebsmotor 25 zugeordneten Riemenscheibe 26 und der Nachbeschleunigerwelle 35 zugeordneten Riemenscheibe 30 und in Längsrichtung des Feldhäcksler 2 etwa mittig zwischen beiden ist dem Hauptantriebsriemen 28 eine weitere Riemenscheibe 38 zugeordnet. Diese Riemenscheibe 38 wird von einer Abtriebswelle 39 durchsetzt, die mit einem Ende mit der Antriebswelle 40 einer als Axialkolbenpumpe ausgeführten Hydropumpe 41 gekoppelt ist. Abtriebsseitig ist der Hydropumpe 41 ein Rohrleitungssystem 42 zugeordnet als Teil eines Hydrauliksystems. Das Rohrleitungssystem 42 mündet mit dem anderen Ende in einen Hydromotor 43, dessen Abtriebswelle 44 mit der Eingangswelle 45 einer Getriebeeinheit 46 gekoppelt ist. Zugleich ist in das Rohrleitungssystem 42 eine Steuerventilanordnung 47 integriert, die einen Druckölstromaustausch zwischen der Hydropumpe 41 und dem Hydromotor 43 steuert und zwar in der Weise, dass die Steuerventilanordnung 47 den Hydraulikölstrom zwischen Hydropumpe 41 und Hydromotor 43 unterbrechen kann, sodass die Einzugorgane 9 schlagartig zum Stillstand kommen. In an sich bekannter Weise wird diese Funktion im Zusammenhang mit sogenannten Fremdkörperdetektoren benötigt, da in an sich bekannter Weise auf deren Detektion von Fremdkörpern die Einzugorgane 9 gestoppt werden, damit die detektierten Fremdkörper nicht in die weiteren Arbeitsorgane des Feldhäckslers 2 gelangen. Es liegt im Rahmen der Erfindung, dass die Steuerung der Druckölströme in an sich bekannter Weise selbsttätig oder durch eine Bedienperson des Feldhäckslers 2 gezielt vorgenommen werden kann.

Die Getriebeeinheit 46 bildet die Antriebseinheit 48 zum Antrieb der Einzugorgane 9, wobei in an sich bekannter Weise den Einzugsorganen 9 ein sogenanntes Verteilgetriebe 49 zugeordnet ist und zwischen dem Verteilgetriebe 49 und der Getriebeeinheit 46 zumindest eine Gelenkwelle 50 zur Übertragung der Antriebsenergie zwischengeschaltet ist. Die die Antriebseinheit 48 bildende Getriebeeinheit 46 ist zumindest teilweise in einem Bereich angeordnet, der in vertikaler Richtung durch das Zugtrum 31 und das Leertrum 34 des Hauptantriebsriemens 28 begrenzt wird und zudem im rückwärtigen Bereich der in Figur 1 dargestellten Vorderachse 22 liegt. Indem der Antriebseinheit 48 der Einzugorgane 9 eine aus der Hydropumpe 41 und dem Hydromotor 43 bestehende hydraulische Einheit 51 zugeordnet ist, kann die Drehzahl der Einzugorgane 9 stufenlos eingestellt werden. Die hydraulische Einheit 51 und die Getriebeeinheit 46 bilden die hydromechanische Getriebeeinheit 52. Gemäß den vorherigen Ausführungen bildet die Riemenscheibe 38 zugleich einem mit dem Hauptantriebsriemen 28 zusammenwirkenden erfindungsgemäßen Abtrieb 32.

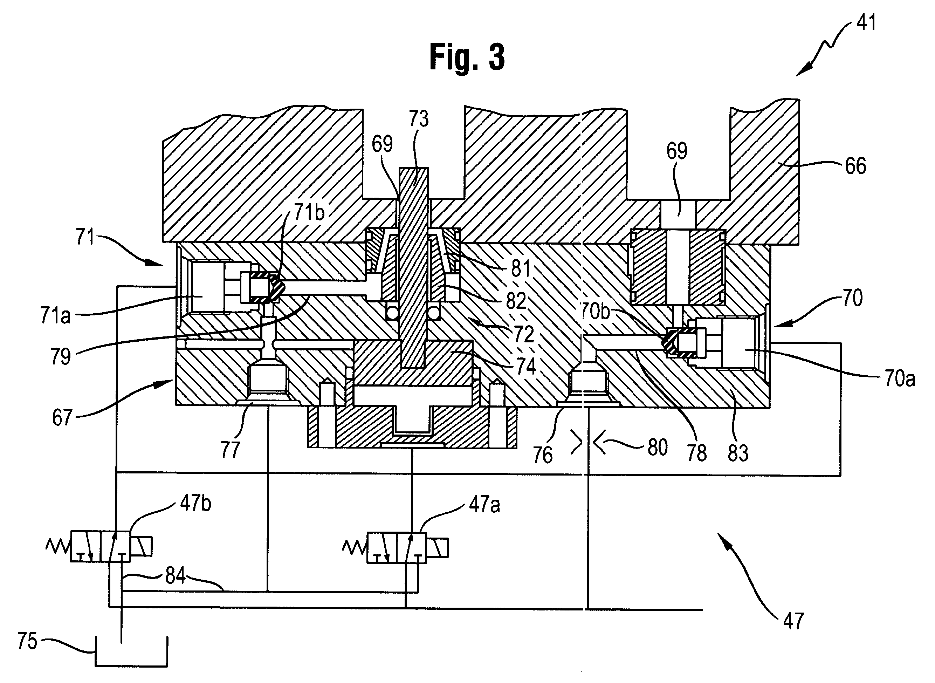

Die Darstellung in Fig. 3 zeigt eine Teilschnittansicht der als Axialkolbenpumpe ausgeführten Hydropumpe 41 mit einer daran angeordneter Ventilbaugruppe 67 sowie in schematischer Darstellung Komponenten der Steuerventilanordnung 47. Die Darstellung in Fig. 3 zeigt lediglich einen Teil eines die Hydropumpe 41 umgebenden Gehäuses 66, an dem die in einem Ventilbaugruppengehäuse 83 angeordnete Ventilbaugruppe 67 anschließbar ist. Das Fördervolumen und die Förderrichtung der Hydropumpe 41 ist durch Veränderung ihres Schwenkwinkels variierbar, was bei Axialkolbenpumpen durch eine Lageänderung ihrer Gleitscheibe erreicht wird. An die Ventilbaugruppe 67 sind Leitung des Rohrleitungssystems 42 anschließbar, um die Hydropumpe 41 mit Hydrauliköl zu versorgen. Das Gehäuse 66 weist einen Zulauf 68 und einen Ablauf 69 auf, denen jeweils ein Einlassventil 70 beziehungsweise ein Auslassventil 71 zugeordnet ist. Des Weiteren umfasst die Ventilbaugruppe 67 auf der Seite des Ablaufs 69 eine Begrenzungsvorrichtung 72, die einen Bolzen 73 und einen sich daran anschließenden zylindrischen Kolben 74 aufweist. Der Bolzen 73 ist in einer Bolzenführung 82, welche Teil der Begrenzungsvorrichtung 72 ist, in axialer Richtung geführt. Zwischen der Bolzenführung 82 und dem unter anderem das Einlassventil 70, das Auslassventil 71 sowie die mechanische Begrenzungsvorrichtung 72 aufnehmenden Ventilbaugruppengehäuse 83 bildet sich eine Ringkammer 81 aus. Weiterhin umfasst die Steuerventilanordnung 47 jeweils ein in das Rohrleitungssystem 42 integriertes erstes Steuerventil 47a und ein zweites Steuerventil 47b, die jeweils durch Hydraulikleitungen 84 mit einem Tank 75 verbunden sind.

Gemäß der Darstellung in Fig. 3 basieren das Einlassventile 70 und das Auslassventil 71 auf der Kolbenlängsschieberbauart. Die jeweiligen Kolben 70a, 71 a des Einlassventiles 70 und des Auslassventiles 71 sind im regulären Betrieb der Einzugorgane 9 mit einem konstanten Hydraulikdruck beaufschlagt. Auf der den Kolben 70a, 71 a abgewandten Seite des jeweiligen Einlassventiles 70 beziehungsweise Auslassventiles 71 befindet sich jeweils ein Dichtelement 70b, 71 b, welches Leitungsabschnitte 78, 79, die den Zulauf 68 beziehungsweise Ablauf 69 mit einem an der Ventilbaugruppe 67 vorgesehenen Einlass 76 beziehungsweise Auslass 77 verbinden, verschließen beziehungsweise freigeben kann. Die Dichtelemente 70b, 71 b sind ebenfalls mit einem Druck beaufschlagt, da jedoch deren Oberfläche kleiner ist, als die der Kolben 70a, 71a, sind das Einlassventil 70 und das Auslassventil 71 geschlossen. Die Druckbeaufschlagung der Kolben 70a, 71 a, um das Einlassventil 70 und das Auslassventil 71 geschlossen zu halten, beziehungsweise die Unterbrechung der Druckbeaufschlagung, um das Einlassventil 70 und das Auslassventil 71 zu öffnen, wird durch das zweite Steuerventil 47b gesteuert.

Dem Einlass 76 vorgeschaltet ist weiterhin eine Drosselblende 80, die den Druck des Hydrauliköls auf der dem Kolben 70a des Einlassventils 70 abgewandten Seite reduziert.

Auf der Seite des Auslasses 77 wird der Kolben 74 der Begrenzungsvorrichtung 72 mittels des ersten Steuerventils 47a mit einem Druck beaufschlagt. Auf der dem Gehäuse 66 der Hydropumpe 41 zugewandten Seite werden die von dem Bolzen 73 gebildete Kolbenfläche sowie durch die Ringkammer 82 die Bolzenführung 82 mit einem pumpenseitig anstehenden Druck beaufschlagt, wodurch die Begrenzungsvorrichtung 72 in einer Gleichgewichtsstellung gehalten wird, die der Nulllage der Gleitscheibe der Hydropumpe 41 entspricht, das heißt, dass kein Hydrauliköl gefördert wird. Diese Position des Bolzens 73, die sich durch das Gleichgewicht der Druckkräfte einstellt, wird durch einen Kalibriervorgang ermittelt und eingestellt, der mit der jeweiligen Hydropumpe 41 durchzuführen ist.

Weiterhin kommt dem ersten Steuerventil 47a neben der Funktion des Einstellbarkeit der Begrenzungsvorrichtung 72 zur Einstellung der Nulllage der Hydropumpe 41 auch die Aufgabe zu, den Bolzen 73 der Begrenzungsvorrichtung 72 einziehen zu können, um bei einem notwendigen Reversieren der Einzugorgane 9 eine entsprechende Förderrichtungsumkehr der Hydropumpe 41 erreichen. Hierzu wird das erste Steuerventil 47a von der Steuereinheit 23 derart geschaltet, dass die Fläche des Kolbens 74 der Begrenzungsvorrichtung 72 ohne Druckbeaufschlagung ist. Die von der Schwenkwiege aufgebrachte Gegenkraft aus dem Steuerdruck des Reversiervorganges bewirkt in dem Fall des Reversierens, dass der Schwenkwinkel der Gleitscheibe eine Stellung einnehmen kann, in der sich die Förderrichtung der Hydropumpe 41 umkehrt. Die Ansteuerung des zweiten Steuerventiles 47b bleibt in dieser Situation unverändert beziehungsweise wird das zweite Steuerventil 47b, wenn ein Schnellstopp durchgeführt wurde, vor dem Reversieren von der Steuereinheit 23 wieder entsprechend angesteuert, um diese Betriebssituation zu erreichen.

Die Funktionsweise des Antriebssystems wird nachstehend erläutert:
Grundsätzlich sind drei Betriebssituationen denkbar, in welchen eine Ansteuerung des ersten und des zweiten Steuerventils 47a, 47b durch die Steuereinheit 23 erforderlich ist. Zu unterscheiden ist der reguläre Betrieb der Einzugorgane 9, das Reversieren der Einzugorgane 9 um einen Fremdkörper auszuscheiden oder um eine Verstopfung zu beseitigen sowie der Schnellstopp der Einzugorgane 9 nach einer Fremdkörperdetektion.

Die Darstellung in Fig. 3 zeigt eine Situation des Antriebssystems, in welcher die Einzugorgane 9 regulär betrieben werden, wobei der Bolzen 73 der Begrenzungsvorrichtung 72 in das Gehäuse 66 der Hydropumpe 41 hineinragt, um bei einer Fremdkörperdetektion als Nullanschlag dienen zu können. Hierzu werden das erste Steuerventil 47a und das zweite Steuerventil 47b durch die Steuereinheit 23 derart angesteuert, dass die Hydropumpe 41 sich in ihrem normalen Betriebsmodus zum Antreiben der Einzugorgane 9 befindet. Das erste Steuerventil 47a wird in dieser Betriebssituation angesteuert, um den Kolben 74 mit einem unter Druck stehenden Hydrauliköl zu beaufschlagen, der den Bozen 73 der Begrenzungsvorrichtung 72 in seine Stellung überführt und hält, die der Nulllage der Gleitscheibe der Hydropumpe 41 entspricht. Das Einlassventil 70 und das Auslassventil 71 sind kolbenseitig mit einem Druck beaufschlagt, um das Einlassventil 70 und das Auslassventil 71 in ihrer die Leitungsabschnitte 78, 79, die den Zulauf 68 beziehungsweise Ablauf 69 mit einem an der Ventilbaugruppe 67 vorgesehenen Einlass 76 beziehungsweise Auslass 77 verbinden, verschließenden Stellung zu halten. Das hierfür notwendige Hydrauliköl kann beispielsweise von einem an dem Feldhäcksler 2 vorgesehenen Konstantdrucksystem bereitgestellt werden. Durch den Einlass 76 wird auf der dem Dichtelement 70b zugewandten Seite ebenfalls Hydrauliköl zugeführt, dessen Druck geringer ist, als der kolbenseitig des Einlassventils 70 anstehende Druck, so dass das Einlassventil 70 geschlossen bleibt. In entsprechender Weise ist das Auslassventil 71 kolbenseitig mit einem Druck beaufschlagt, um auch diese in geschlossener Stellung zu halten.

Wird durch die Detektion eines Fremdkörpers das sofortige Anhalten der Einzugorgane 9 zur Vermeidung von Beschädigungen erforderlich, ein so genannter Schnellstopp, wird durch entsprechende Ansteuerung des zweiten Steuerventiles 47b die jeweils kolbenseitige Druckbeaufschlagung des Einlassventiles 70 und das Auslassventiles 71 unterbrochen, wodurch sich das Einlassventil 70 und das Auslassventil 71 schlagartig öffnen. Dies führt dazu, dass das am Einlass 76 anstehende Hydrauliköl durch die Zuleitung 78 und den Zulauf 68 in das Gehäuse 66 strömen kann, wodurch der Schwenkwinkel der Hydropumpe 41 schlagartig derart verändert wird, dass die Hydropumpe 41 entgegen ihrer ursprünglichen Förderrichtung fördert. Damit es jedoch nicht zu einem ungewollten Reversieren kommt, wird die Veränderung des Schwenkwinkels der Hydropumpe 41 durch den in das Gehäuse 66 hineinragenden Bolzen 73 in der Weise begrenzt, dass das Fördervolumen der Hydropumpe 41 abrupt einen Wert von Null erreicht. Das in das Gehäuse 66 durch den Zulauf 68 einströmende Hydrauliköl bewirkt, dass die Gleitscheibe der Hydropumpe 41 in dieser Stellung, in der sie ablaufseitig gegen den Bolzen 73 gepresst wird, in ihrer Nulllage gehalten wird. Das zwischen der Gleitscheibe der Hydropumpe 41 und dem Gehäuse 66 auf Seiten des Ablaufes 69 eingeschlossene Hydrauliköl fließt über die Ringkammer 81 sowie die sich daran anschließende Zuleitung 79 über den Auslass 77 ab und gelangt in den Tank 75 zurück.

Nachdem der Schnellstopp der Einzugorgane 9 durchgeführt wurde, werden die Einzugorgane 9 in der Regel reversierend angetrieben, um aufgenommene Fremdkörper ausscheiden zu können. Hierzu wird zunächst das zweite Steuerventil 47b durch die Steuereinheit 23 in der Weise angesteuert, dass das Einlassventil 70 und das Auslassventil 71 wieder geschlossen werden, was durch die Druckbeaufschlagung der Kolben 70a, 71 a erreicht wird. Im Anschluss daran oder zeitgleich wird das erste Steuerventil 47 a durch die Steuereinheit 23 angesteuert, um den Bolzen 73 der Begrenzungsvorrichtung 72 einzuziehen, so dass der Schwenkwinkel der Hydropumpe 41 einen Wert kleiner 0° annehmen kann, was zu einem Reversieren der Einzugorgane 9 führt.

Für die Betriebssituation des Reversierens der Einzugorgane 9, um einen Erntegutstau zu beseitigen, wird lediglich das erste Steuerventil 47a in der zuvor beschriebenen Weise angesteuert. Das zweite Steuerventil 47b wird nicht angesteuert, so dass das Einlassventil 70 und das Auslassventil 71 geschlossen bleiben.

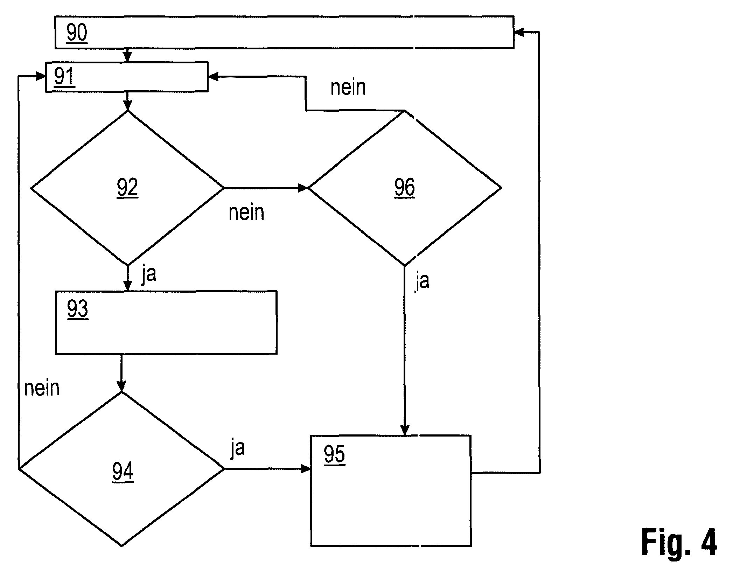

Die Darstellung in Fig. 4 veranschaulicht das Verfahren zum Betreiben des als Feldhäckslers 2 ausgeführten Arbeitsmaschine 1 anhand eines Flussdiagrammes. Mit der Inbetriebnahme des Feldhäckslers 2 im Schritt 90 wird durch die Steuereinheit 23 das erste Steuerventil 47a angesteuert, um die Begrenzungsvorrichtung 72 in ihre Begrenzungsstellung zu überführen, das heißt, in der die Begrenzungsvorrichtung 72 als mechanischer Nullanschlag der Hydropumpe 41 fungiert. Im Anschluss daran setzt in Schritt 91 die Überwachung beziehungsweise Detektion des Vorliegens eines Betriebszustandes durch die Steuereinheit 23 ein, welcher für das Eindringen eines Fremdkörpers in das Einzugorgan 9 der Arbeitsmaschine 2 oder ein Auslösen eines Reversiervorganges des Einzugorganes 9 repräsentativ ist.

Im Schritt 92 wird abgefragt, ob ein Betriebszustand vorliegt, der das Eindringen eines Fremdkörpers in das Einzugorgan 9 repräsentiert. Wurde ein Eindringen eines Fremdkörpers in das Einzugsorgan detektiert, wird im Schritt 93 das zweite Steuerventil 47b von der Steuereinheit 23 angesteuert. Die Ansteuerung bewirkt, dass das Einlassventil 70 und das Auslassventil 71 geöffnet werden. Dies löst, wie weiter oben bereits ausgeführt, den Schnellstopp der Hydropumpe 41 und damit des Einzugorganes 9 aus. Um im Einzugorgan 9 befindliche Fremdkörper auszuscheiden, wird im Allgemeinen das Einzugorgan 9 reversierend angetrieben, was, manuell oder automatisch ausgelöst, im Schritt 94 detektiert wird. Wurde ein den Reversiervorgang auslösendes Ereignis durch die Steuereinheit 23 detektiert, so wird in Schritt 95 das erste Steuerventil 47a derart angesteuert, dass die Begrenzungsvorrichtung 72 in eine Reversierstellung überführt wird, das heißt, dass die Funktion des Begrenzungselementes 72 deaktiviert wird, wie weiter oben ausgeführt ist, so dass die Hydropumpe ein negatives Fördervolumen hat, was zu einem langsamen Reversieren des Einzugorganes 9 führt.

Wurde in Schritt 92 kein Fremdkörper detektiert, so wird in Schritt 96 überprüft, ob ein Reversiervorgang ausgelöst wurde, was im Fall eines Erntegutstaus in dem Einzugorgan 9 des Feldhäckslers 2 eine übliche Maßnahme darstellt. Liegt ein das Auslösen eines Reversiervorganges des Einzugorganes 9 repräsentierendes Signal vor, so wird das erste Steuerventil 47a derart angesteuert, dass die Begrenzungsvorrichtung 72 in ihre Reversierstellung überführt wird.

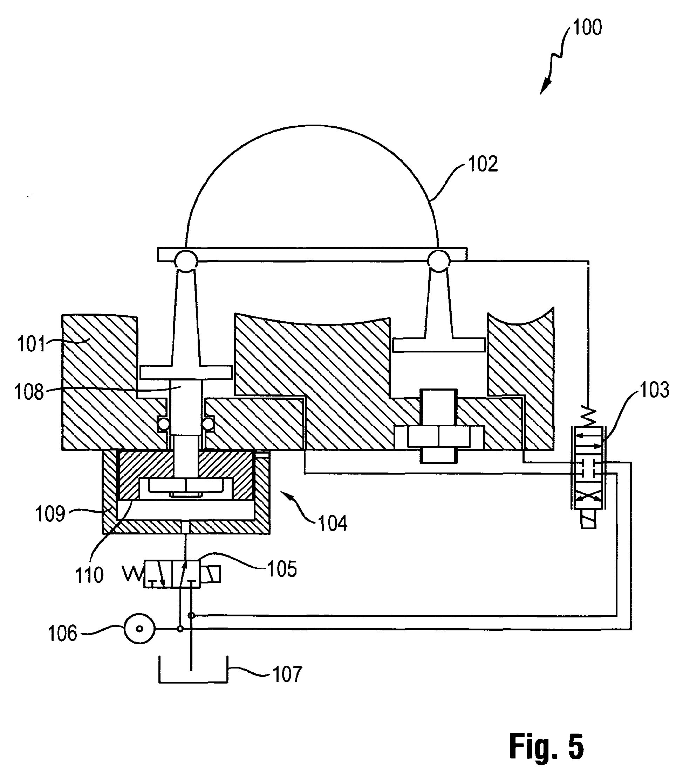

In Fig. 5 ist eine Teilschnittansicht einer als Axialkolbenpumpe ausgeführten Hydropumpe 100 mit einem diesem zugeordneten Steuerventil sowie einer Begrenzungsvorrichtung gemäß einer zweiten Ausführungsform dargestellt. Hierbei handelt es sich um einen gegenüber dem ersten Ausführungsbeispiel vereinfachten Aufbau. Die Hydropumpe 100 ist in einem Gehäuse 101 angeordnet, welches nur Teilweise in der Schnittansicht dargestellt ist. Im Inneren des Gehäuses 101 befindet sich eine Schwenkwiege 102, deren Auslenkung eine Änderung des Schwenkwinkels der Hydropumpe 100 bewirkt. Der Schwenkwinkel der Schwenkwiege 102 ist durch ein Magnetventil 103 einstellbar. An dem Gehäuse 101 ist eine Begrenzungsvorrichtung 104 angeordnet, die von einem Steuerventil 105 ansteuerbar ist. Die Begrenzungsvorrichtung 104 umfasst einen Bolzen 108, der in einer an das Gehäuse 101 anflanschbaren Einhausung 109 angeordnet ist. Der Bolzen 108 ist gegenüber der Einhausung 109 verschieblich gelagert und gelangt durch eine Öffnung im Gehäuse 101 der Hydropumpe 100 in deren Inneres. An dem Bolzen 108 ist ein Bodenelement 110 angeordnet, welches eine größere Grundfläche als der Bolzen 108 aufweist. Der Bolzen 108 ist durch eine Schraubverbindung mit dem Bodenelement 110 verbunden.

Eine Druckquelle 106 beaufschlagt das Magnetventil 103 beziehungsweise das Steuerventil 105 mit einem Hydraulikdruck. Des Weiteren ist ein Tank 107 vorgesehen, mit dem die Hydropumpe 100 durch Leitungen verbunden ist, Die Darstellung in Fig. 5 zeigt eine Betriebssituation der Hydropumpe 100, in welcher die Hydropumpe 100 auf Grund eines Schnellstopps kein Hydrauliköl fördert. Hierzu wird das Magnetventil 103 stromlos geschaltet, so dass die Schwenkwiege 102 einen negativen Schwenkwinkel anstrebt. Die Bewegung der Schwenkwiege 102 wird durch einen in das Gehäuse 101 der Hydropumpe 100 ragenden Kolben 108 begrenzt, der Teil der Begrenzungsvorrichtung 104 ist. Das Steuerventil 105 wird in dieser Betriebssituation derart angesteuert, dass der Bolzen 108 auf seiner dem Gehäuse 101 abgewandten Seite mit einem Hydraulikdruck beaufschlagt wird, der von der Druckquelle 106 bereitgestellt wird. Auf diese Weise wird der Bolzen 108 in eine Position überführt, die dem Nullanschlag der Hydropumpe 100 entspricht.

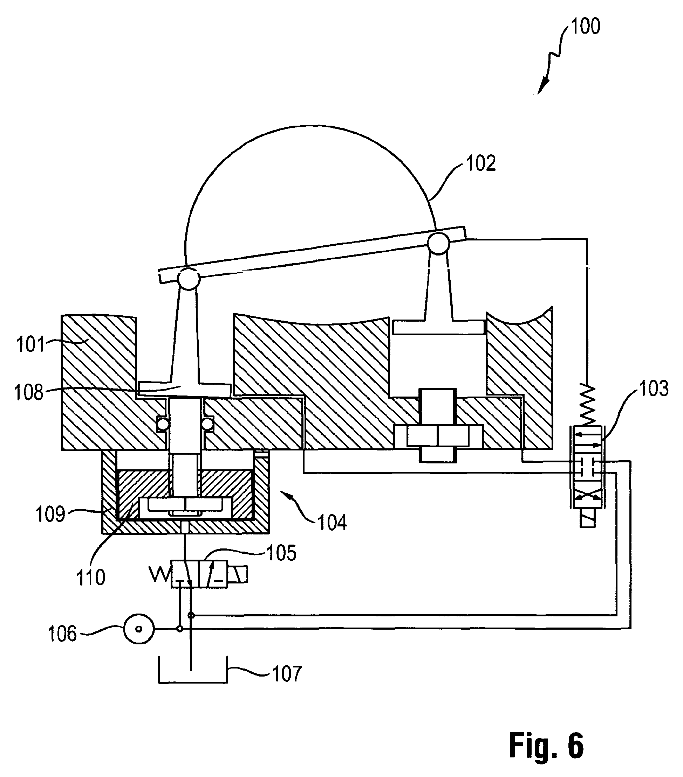

Fig. 6 zeigt eine Teilschnittansicht einer als Axialkolbenpumpe ausgeführten Hydropumpe 100 mit einem diesem zugeordneten Steuerventil 105 sowie einer Begrenzungsvorrichtung 104 gemäß der zweiten Ausführungsform in einer zweiten Betriebssituation. Die dargestellte Betriebssituation zeigt die Hydropumpe 100 während des Reversierens. Hierbei wird das Magnetventil 103 gleichfalls stromlos geschaltet, wie es bei dem Schnellstopp der Fall ist. Dies führt, dazu, dass die Schwenkwiege 102 auf Grund ihrer Gewichtsverteilung einen negativen Schwenkwinkel anstrebt. Damit die Schwenkwiege 102 sich über ihre Nullstellung hinaus bewegen kann, wird das Steuerventil 105 derart angesteuert, dass das Hydrauliköl in der Einhausung 109 , mit welchem der Bolzen 108 beaufschlagt wird, in den Tank 107 abfließen kann. Durch das Gewicht der Schwenkwiege 102 und das Fehlen des Gegendruckes wird der Bolzen 108 aus dem Inneren des Gehäuses 101 gedrückt. Durch das Entfallen des mechanischen Anschlags im Inneren des Gehäuses 101 der Hydropumpe 100 nimmt die Schwenkwiege einen negativen Schwenkwinkel an.

**Bezugszeichenliste**

| | | | |
|---|---|---|---|
| **1** | Arbeitsmaschine | **31** | Zugtrum |
| **2** | Feldhäcksler | **32** | Abtrieb |
| **3** | Vorsatzgerät | **33** | Spanneinrichtung |
| **4** | Pick-up | **34** | Leertrum |
| **5** | Erntegutstrang | **35** | Antriebswelle |
| **6** | Niederhalteeinrichtung | **36** | Riemenscheibe |
| **7** | Aufsammeltrommel | **37** | Getriebestufe |
| **8** | Querförderschnecke | **38** | Riemenscheibe |
| **9** | Einzugorgane | **39** | Abtriebswelle |
| **10** | Einzugswalze | **40** | Antriebswelle |
| **11** | Vorpresswalze | **41** | Hydropumpe |
| **12** | Häckseltrommel | **42** | Rohrleitungssystem |
| **13** | Häckselmesser | **43** | Hydromotor |
| **14** | Gegenschneide | **44** | Abtriebswelle |
| **15** | Crackerwalze | **45** | Eingangswelle |
| **16** | Nachzerkleinerungseinrichtung | **46** | Getriebeeinheit |
| **17** | Nachbeschleuniger | **47** | Steuerventilananordung |
| **18** | Auswurfschacht | **47** | erstes Steuerventil |
| **19** | Auswurfkrümmer | **47b** | zweites Steuerventil |
| **20** | Arbeitsorgan | **48** | Antriebseinheit |
| **21** | Kabine | **49** | Verteilgetriebe |
| **22** | Vorderachse | **50** | Gelenkwelle |
| **23** | Steuereinheit | **51** | Hydraulische Einheit |
| **24** | Ein- und Ausgabeeinheit | **52** | Getriebeeinheit |
| **25** | Antriebsmotor | **66** | Gehäuse |
| **26** | Riemenscheibe | **67** | Ventilbaugruppe |
| **27** | Antriebsriemen | **68** | Zulauf |
| **28** | Hauptantriebsriemen | **69** | Ablauf |
| **29** | Antriebswelle | **70** | Einlassventil |
| **30** | Riemenscheibe | **70a 70b** | Kolben Dichtelemente |
| **71** | Auslassventil | **106** | Druckquelle |
| **71a** | Kolben | **107** | Tank |
| **71b** | Dichtelement | **108** | Bolzen |
| **72** | Begrenzungsvorrichtung | **109** | Einhausung |
| **73** | Bolzen | **110** | Bodenelement |
| **74** | Kolben | | |
| **75** | Tank | | |
| **76** | Einlass | | |
| **77** | Auslass | | |
| **78** | Leitungsabschnitt | | |
| **79** | Leitungsabschnitt | | |
| **80** | Drosselblende | | |
| **81** | Ringkammer | | |
| **82** | Bolzenführung | | |
| **83** | Ventilbaugruppengehäuse | | |
| **84** | Hydraulikleitung | | |
| **90** | Schritt | | |
| **91** | Schritt | | |
| **92** | Schritt | | |
| **93** | Schritt | | |
| **94** | Schritt | | |
| **95** | Schritt | | |
| **96** | Schritt | | |
| **97** | Schritt | | |
| | | | |
| **100** | Hydropumpe | | |
| **101** | Gehäuse | | |
| **102** | Schwenkwiege | | |
| **103** | Magnetventil | | |
| **104** | Begrenzungsvorrichtung | | |
| **105** | Steuerventil | | |

## Patentansprüche

1. Antriebssystem für hydraulisch angetriebene Arbeitsorgane (9) einer Arbeitsmaschine (2), umfassend eine Axialkolbenpumpe (41), deren Fördervolumen und Förderrichtung durch Veränderung ihres Schwenkwinkels variierbar ist, einen mit der Axialkolbenpumpe (41, 100) leitungsverbundenden Hydromotor, der mit den Arbeitsorganen (9) in Antriebsverbindung steht, sowie eine Steuereinheit (23), die betreibbar ist, das Fördervolumen der Axialkolbenpumpe (41) durch Ansteuerung eines Magnetventils (103) auf null zu stellen, **dadurch gekennzeichnet, dass** das Antriebssystem eine von der Steuereinheit (23) ansteuerbare Aktorik (47) aufweist, durch welche eine Begrenzungsvorrichtung (72, 104), die ein kolbenförmiges Element (73, 74) aufweist, welches zumindest einseitig hydraulisch druckbeaufschlagbar ist, ansteuerbar ist, durch die der Schwenkwinkel der Axialkolbenpumpe (41, 100) mechanisch auf null Grad (0°) festlegbar ist.

2. Antriebssystem nach Anspruch 1, **dadurch gekennzeichnet, dass** die Aktorik als ein Steuerventil (105) ausgeführt ist.

3. Antriebssystem nach einem der Ansprüche 1 oder 2, **dadurch gekennzeichnet, dass** die Begrenzungsvorrichtung (72, 104) in die Axialkolbenpumpe (41, 100) integriert ist.

4. Antriebssystem nach Anspruch 1, **dadurch gekennzeichnet, dass** die Aktorik als eine Steuerventilanordnung (47) ausgeführt ist.

5. Antriebssystem nach Anspruch 4,**dadurch gekennzeichnet, dass** die Steuerventilanordnung (47) eine Ventilbaugruppe (67) sowie ein erstes und ein zweites Steuerventil (47a, 47b) umfasst.

6. Antriebssystem nach Anspruch 5,**dadurch gekennzeichnet, dass** die Ventilbaugruppe (67) ein Ventilbaugruppengehäuse (83) umfasst, in welchem ein Einlassventil (70) und ein Auslassventil (71) sowie die Begrenzungsvorrichtung (72) angeordnet sind.

7. Antriebssystem nach einem der Ansprüche 5 oder 6,**dadurch gekennzeichnet, dass** die Begrenzungsvorrichtung (72) durch das erste Steuerventil (47a) ansteuerbar ist.

8. Antriebssystem nach einem der Ansprüche 5 bis 7, **dadurch gekennzeichnet, dass** das zweite Steuerventil (47b) das Einlassventil (70) und das Auslassventil (71), welche den Zufluss sowie den Abfluss von Hydrauliköl zu beziehungsweise von der Axialkolbenpumpe (41) steuern, ansteuert.

9. Antriebssystem nach einem der Ansprüche 1 bis 8, **dadurch gekennzeichnet, dass** die Begrenzungsvorrichtung (72) derart verstellbar ist, dass die Förderrichtung der Axialkolbenpumpe (41) umkehrbar ist.

10. Antriebssystem nach einem der Ansprüche 1 bis 9,**dadurch gekennzeichnet, dass** die Steuereinheit (23) zur Detektion eines Betriebszustandes der Arbeitsmaschine eingerichtet ist, der für das Eindringen eines Fremdkörpers in ein Arbeitsorgan (9) der Arbeitsmaschine (1) oder ein Auslösen eines Reversiervorganges eines Arbeitsorganes (9) repräsentativ ist.

11. Verfahren zum Betreiben eines Antriebssystems für hydraulisch angetriebene Arbeitsorgane (9) einer Arbeitsmaschine (2), mit einer Axialkolbenpumpe (41), deren Fördervolumen und Förderrichtung durch Veränderung ihres Schwenkwinkels variiert wird, einen mit der Axialkolbenpumpe (41) leitungsverbundenden Hydromotor, der mit den Arbeitsorganen (9) in Antriebsverbindung steht, sowie eine Steuereinheit (23), die derart betreibbar ist, dass das Fördervolumen der Axialkolbenpumpe (41) auf null gestellt wird, **dadurch gekennzeichnet, dass** das Vorliegen eines Betriebszustandes detektiert wird, der für das Eindringen eines Fremdkörpers in ein Arbeitsorgan (9) der Arbeitsmaschine (2) oder ein Auslösen eines Reversiervorganges eines Arbeitsorganes (9) repräsentativ ist, und dass in Abhängigkeit von dem detektierten Betriebszustand durch die Steuereinheit (23) ein kolbenförmiges Element (73, 74) aufweist, welches zumindest einseitig hydraulisch druckbeaufschlagbar ist, angesteuert wird, mittels der der Schwenkwinkel der Axialkolbenpumpe (41) dem detektierten Betriebszustand entsprechend mechanisch festgelegt wird.

12. Verfahren nach Anspruch 11,**dadurch gekennzeichnet, dass** von der Steuereinheit (23) ein erstes Steuerventil (47a) der Steuerventilanordnung (47) derart angesteuert wird, dass die Begrenzungsvorrichtung (72) in eine Stellung überführt wird, in welcher der Schwenkwinkel der Axialkolbenpumpe (41) durch die Begrenzungsvorrichtung (72) auf null festgelegt wird.

13. Verfahren nach einem der Ansprüche 11 oder 12,**dadurch gekennzeichnet, dass** bei Detektion des Auslösens eines Reversiervorganges das erste Steuerventil (47a) der Steuerventilanordnung (47) derart angesteuert wird, dass die Begrenzungsvorrichtung (72) in eine Stellung überführt wird, in der die Axialkolbenpumpe (41) reversierend betreibbar ist.

14. Verfahren nach einem der Ansprüche 11 oder 12,**dadurch gekennzeichnet, dass** bei Detektion eines Fremdkörpers in einem Arbeitsorgan (9) von der Steuereinheit (23) ein zweites Steuerventil (47b) derart angesteuert wird, dass die Axialkolbenpumpe (41) eine Förderrichtungsumkehr erfährt.

## Claims

1. A drive system for hydraulically driven working members (9) of a working machine (2) including an axial piston pump (41) whose delivery volume and delivery direction is variable by a change in its pivot angle, a hydraulic motor line-connected to the axial piston pump (41, 100) and drivingly connected to the working members (9) and a control unit (23) which is operable to set the delivery volume of the axial piston pump (41) to zero by actuation of a solenoid valve (103), **characterised in that** the drive system has an actuator (47) which is actuable by the control unit (23) and by which a limiting device (72, 104) having an element (73, 74) which is of piston form and which can be subjected to hydraulic pressure at least at one side is actuable, by which the pivot angle of the axial piston pump (41, 100) can be mechanically fixed at zero degree (0°).

2. A drive system according to claim 1 **characterised in that** the actuator is in the form of a control valve (105).

3. A drive system according to one of claims 1 and 2 **characterised in that** the limiting device (72, 104) is integrated into the axial piston pump (41, 100).

4. A drive system according to claim 1 **characterised in that** the actuator is in the form of a control valve arrangement (47).

5. A drive system according to claim 4 **characterised in that** the control valve arrangement (47) includes a valve assembly (67) and a first and a second control valve (47a, 47b).

6. A drive system according to claim 5 **characterised in that** the valve assembly (67) includes a valve assembly housing (83) in which an inlet valve (70) and an outlet valve (71) as well as the limiting device (72) are arranged.

7. A drive system according to one of claims 5 and 6 **characterised in that** the limiting device (72) is actuable by the first control valve (47a).

8. A drive system according to one of claims 5 to 7 **characterised in that** the second control valve (47b) actuates the inlet valve (70) and the outlet valve (71) which control the feed flow and the discharge flow of hydraulic oil to and from the axial piston pump (41).

9. A drive system according to one of claims 1 to 8 **characterised in that** the limiting device (72) is displaceable in such a way that the delivery direction of the axial piston pump (41) is reversible.

10. A drive system according to one of claims 1 to 9 **characterised in that** the control unit (23) is adapted to detect an operating state of the working machine which is representative of the entry of a foreign body into a working member (9) of the working machine (1) or triggering of a reversing procedure of a working member (9).

11. A method of operating a drive system for hydraulically driven working members (9) of a working machine (2) having an axial piston pump (41) whose delivery volume and delivery direction is varied by a change in its pivot angle, a hydraulic motor line-connected to the axial piston pump (41) and drivingly connected to the working members (9) and a control unit (23) which is operable in such a way that the delivery volume of the axial piston pump (41) is set to zero, **characterised in that** the presence of an operating state is detected, which is representative of the entry of a foreign body into a working member (9) of the working machine (2) or triggering of a reversing procedure of a working member (9) and that in dependence on the detected operating state an actuator (47, 105) for actuating a limiting device (72) which has an element (73, 74) which is of piston form and which can be subjected to hydraulic pressure at least at one side is actuated by the control unit (23), by means of which the pivot angle of the axial piston pump (41) is mechanically established to correspond to the detected operating state.

12. A method according to claim 11 **characterised in that** a first control valve (47a) of the control valve arrangement (47) is actuated by the control unit (23) in such a way that the limiting device (72) is transferred into a position in which the pivot angle of the axial piston pump (41) is set to zero by the limiting device (72).

13. A method according to one of claims 11 and 12 **characterised in that** upon detection of the triggering of a reversing procedure the first control valve (47a) of the control valve arrangement (47) is so actuated that the limiting device (72) is transferred into a position in which the axial piston pump (41) is reversingly operable.

14. A method according to one of claims 11 and 12 **characterised in that** upon detection of a foreign body in a working member (9) a second control valve (47b) is so actuated by the control unit (23) that the axial piston pump (41) experiences a reversal in its delivery direction.

## Revendications

1. Système d'entraînement pour des organes de travail (9) entraînés hydrauliquement d'une machine de travail (2), comprenant une pompe à pistons axiaux (41) dont on peut faire varier le volume déplacé et le sens de refoulement par modification de son angle d'inclinaison, un moteur hydraulique qui relié par une conduite à la pompe à pistons axiaux (41, 100) et qui est en liaison d'entraînement avec les organes de travail (9), ainsi qu'une unité de commande (23) que l'on peut faire fonctionner pour mettre à zéro le volume déplacé de la pompe à pistons axiaux (41) par activation d'une électrovanne (103), **caractérisé en ce que** le système d'entraînement comporte un actionneur (47), lequel est activable par l'unité de commande (23) et permet d'activer un dispositif de limitation (72, 104) qui comporte un élément en forme de piston (73, 74) pouvant être soumis au moins d'un côté à une pression hydraulique et qui permet de fixer mécaniquement à zéro degré (0°) l'angle d'inclinaison de la pompe à pistons axiaux (41, 100).

2. Système d'entraînement selon la revendication 1, **caractérisé en ce que** l'actionneur est réalisé sous la forme d'une soupape de commande (105).

3. Système d'entraînement selon l'une des revendications 1 ou 2, **caractérisé en ce que** le dispositif de limitation (72, 104) est intégré à la pompe à pistons axiaux (41, 100).

4. Système d'entraînement selon la revendication 1, **caractérisé en ce que** l'actionneur est conçu sous la forme d'un ensemble soupapes de commande (47).

5. Système d'entraînement selon la revendication 4, **caractérisé en ce que** l'ensemble soupapes de commande (47) comprend un bloc de soupapes (67) ainsi qu'une première et une deuxième soupape de commande (47a, 47b).

6. Système d'entraînement selon la revendication 5, **caractérisé en ce que** le bloc de soupapes (67) comprend un boîtier de bloc de soupapes (83) dans lequel sont disposés une soupape d'entrée (70), une soupape de sortie (71) et le dispositif de limitation (72).

7. Système d'entraînement selon l'une des revendications 5 ou 6, **caractérisé en ce que** le dispositif de limitation (72) peut être activé par la première soupape de commande (47a).

8. Système d'entraînement selon l'une des revendications 5 à 7, **caractérisé en ce que** la deuxième soupape de commande (47b) active la soupape d'entrée (70) et la soupape de sortie (71), lesquelles commandent l'amenée et l'évacuation d'huile hydraulique vers, respectivement de, la pompe à pistons axiaux (41).

9. Système d'entraînement selon l'une des revendications 1 à 8, **caractérisé en ce que** le dispositif de limitation (72) est réglable de façon que le sens de refoulement de la pompe à pistons axiaux (41) soit réversible.

10. Système d'entraînement selon l'une des revendications 1 à 9, **caractérisé en ce que** l'unité de commande (23) est conçue pour détecter un état de fonctionnement de la machine de travail représentatif de la pénétration d'un corps étranger dans un organe de travail (9) de la machine de travail (1) ou d'un déclenchement d'une inversion de marche d'un organe de travail (9).

11. Procédé pour faire fonctionner un système d'entraînement pour des organes de travail (9) entraînés hydrauliquement d'une machine de travail (2), comprenant une pompe à pistons axiaux (41) dont on fait varier le volume déplacé et le sens de refoulement par modification de son angle d'inclinaison, un moteur hydraulique relié par une conduite à la pompe à pistons axiaux (41), qui est en liaison d'entraînement avec les organes de travail (9), ainsi qu'une unité de commande (23) que l'on peut faire fonctionner de façon que le volume déplacé de la pompe à pistons axiaux (41) soit mis à zéro, **caractérisé en ce que** la présence d'un état de fonctionnement représentatif de la pénétration d'un corps étranger dans un organe de travail (9) de la machine de travail (2) ou d'un déclenchement d'une inversion de marche d'un organe de travail (9) est détecté, et qu'en fonction de l'état de fonctionnement détecté, l'unité de commande (23) active un actionneur (47, 105) servant à activer un dispositif de limitation (72) qui comporte un élément en forme de piston (73, 74) pouvant être soumis au moins d'un côté à une pression hydraulique et qui permet de fixer mécaniquement l'angle d'inclinaison de la pompe à pistons axiaux (41) en fonction de l'état de fonctionnement détecté.

12. Procédé selon la revendication 11, **caractérisé en ce que** l'unité de commande (23) active une première soupape de commande (47a) de l'ensemble soupapes de commande (47) de façon que le dispositif de limitation (72) soit transféré dans une position où l'angle d'inclinaison de la pompe à pistons axiaux (41) est fixé à zéro par le dispositif de limitation (72).

13. Procédé selon l'une des revendications 11 ou 12, **caractérisé en ce qu'**en cas de détection du déclenchement d'une inversion de marche, la première soupape de commande (47a) de l'ensemble soupapes de commande (47) est activée de façon que le dispositif de limitation (72) soit transféré dans une position où la pompe à pistons axiaux (41) peut fonctionner de manière réversible.

14. Procédé selon l'une des revendications 11 ou 12, **caractérisé en ce qu'**en cas de détection d'un corps étranger dans un organe de travail (9), l'unité de commande (23) active une deuxième soupape de commande (47b) de façon que la pompe à pistons axiaux (41) connaisse une inversion du sens de refoulement.
